# EUROPÄISCHE PATENTSCHRIFT

(11) **EP 3 365 139 B1**
(45) Veröffentlichungstag und Bekanntmachung des Hinweises auf die Patenterteilung: **26.01.2022**
(21) Anmeldenummer: 16777978.4
(22) Anmeldetag: 04.10.2016
(51) Int. Cl.: B25J 9/00

(54) **PARALLELKINEMATIK-ROBOTER UND VERFAHREN ZU DESSEN HANDHABUNG**
PARALLEL-KINEMATICS ROBOT AND METHOD FOR MANIPULATING SAME
ROBOT À CINÉMATIQUE PARALLÈLE ET PROCÉDÉ DE MANIPULATION DUDIT ROBOT

(30) Priorität: 20.10.2015 DE 102015220413
(43) Veröffentlichungstag der Anmeldung: 29.08.2018
(73) Patentinhaber: KRONES Aktiengesellschaft, 93073 Neutraubling (DE)
(72) Erfinder: HARTL, Michael, 93073 Neutraubling (DE); PERL, Kurt, 93073 Neutraubling (DE); UNTERSEHER, Josef, 93073 Neutraubling (DE); WESTERMEIER, Christian, 93073 Neutraubling (DE)
(74) Vertreter: Benninger, Johannes
(86) Internationale Anmeldenummer: PCT/EP2016/073616
(87) Internationale Veröffentlichungsnummer: WO 2017/067780

(56) Entgegenhaltungen:
- DE-A1-102010 007 631
- KR-B1- 101 483 081
- US-A1- 2015 073 597

## Beschreibung

Die vorliegende Erfindung betrifft einen Parallelkinematik-Roboter mit den Merkmalen des Anspruchs 1 und ein Verfahren zur Handhabung und/oder Steuerung eines solchen Parallelkinematik-Roboters mit den Merkmalen des unabhängigen Verfahrensanspruchs 11.

Bekannte Verpackungs- oder Palettieranlagen zum Stapeln und Palettieren von Objekten wie Paketen oder Gebinden mit mehreren Artikeln wie bspw. Getränkebehältern weisen üblicherweise Horizontalfördereinrichtungen mit Förderbändern auf, auf denen die Stückgüter oder Gebinde in ununterbrochener oder unregelmäßiger Folge zu einer Handhabungseinrichtung befördert werden. Dort erfolgt eine Verschiebung, Ausrichtung und/oder Drehen einzelner Stückgüter oder Gebinde, um diese in eine geeignete räumliche Anordnung zu bringen, die eine Basis bildet, um die Stückgüter oder Gebinde in nachgeordneten Gruppierstationen zu stapelfähigen Stückgut- oder Gebindelagen zusammenzuschieben.

In aktuellen Abfüll- und Verpackungslinien werden zahlreiche unterschiedliche Varianten zum Drehen von Gebinden eingesetzt, die bspw. geeignete bewegliche Anschläge oder zwei Bänder mit unterschiedlichen Geschwindigkeiten aufweisen können. Bekannte Handhabungseinrichtungen können auch mit Greifern versehen sein, die bspw. an einem Portalsystem aufgehängt und in einem definierten Bewegungsbereich verschoben, rotiert und zudem in vertikaler Richtung bewegt werden können, um einzelne Stückgüter oder Gebinde zum Drehen und/oder Verschieben anheben zu können. Die Greifer können bspw. auch an Mehrachsroboterarmen angeordnet sein, die seitlich an den Horizontalfördereinrichtungen platziert sind. Derartige Greifvorrichtungen sind etwa aus der EP 2 388 216 A1 bekannt.

Darüber hinaus gibt es weitere Handhabungseinrichtungen zum Greifen, Verschieben, Drehen und/oder Versetzen von Artikeln oder Gebinden, die auf sog. Deltarobotern oder Parallelkinematik-Robotern basieren, welche in einer dreiarmigen Ausführung auch als Tripode bezeichnet werden. Jeder der Arme eines solchen Tripods oder Deltaroboters besteht aus einem an der Basis um eine gestellfeste Schwenkachse angetrieben verschwenkbar angeordneten Oberarm und einem mit dem Oberarm und einem Koppelelement gelenkig verbundenen Unterarm. Der Unterarm ist hierbei passiv, frei von einem Antrieb zu dessen Verschwenkung gegenüber dem Oberarm oder dem Koppelelement ausgeführt. Einer oder mehrere der Unterarme können bspw. über Kugelgelenke oder andere mehrachsig bewegliche Gelenke mit den jeweils zugehörigen Oberarmen und dem Koppelelement verbunden sein. Ein solcher einzelner Unterarm ist frei schwenkbar und besitzt keine Eigenstabilität. Alle Oberarme eines Deltaroboters sind jeweils um vorzugsweise innerhalb einer gemeinsamen Ebene liegende Schwenkachsen verschwenkbar angetrieben gelagert. Drei mit dem Koppelelement und jeweils mit ihrem zugehörigen Oberarm verbundene Unterarme bilden in jeder Position ein Kraftdreieck, das sich nur bewegen lässt, wenn die drei Oberarme synchron die für sie berechneten Schwenkbewegungen um deren gestellfeste Schwenkachsen ausführen. Zwei oder mehr Schwenkachsen können parallel verlaufen; in der Regel weisen alle Schwenkachsen zwei Schnittpunkte mit anderen Schwenkachsen auf.

Wenigstens einer der Unterarme kann wahlweise aus zwei auch als Elle und Speiche bezeichneten, ein Parallelogrammgestänge bildenden Gestängeelementen bestehen, um das Koppelelement in zumindest einer vorgegebenen Ausrichtung relativ zur Basis zu führen. Typischerweise sind alle Unterarme jeweils aus solchen als Parallelogrammgestänge fungierenden Strebenpaaren gebildet. Das an den Unterarmen gelenkig aufgehängte Koppelelement dient dabei als Arbeitsplattform, die in der Praxis auch als Tool-Center-Point (TCP) bezeichnet wird. An diesem TCP kann ein Manipulator angeordnet sein, bspw. in Gestalt von gegeneinander zustellbaren Greifarmen o. dgl. Handhabungseinrichtung, so dass damit Artikel, Gebinde o. dgl. Stückgüter ergriffen und gedreht, verschoben oder von einer Auflagefläche angehoben werden können.

Der an der Arbeitsplattform bzw. dem TCP angeordnete Manipulator kann wahlweise drehbar gelagert sein, um den Manipulator ausrichten oder eine gewünschte Drehung der Artikel oder Stückgüter ausführen zu können. Anstelle einer antreibbar drehbaren Lagerung des Manipulators am Koppelelement ist grundsätzlich auch denkbar, den Manipulator unverdrehbar am Koppelelement anzuordnen und das gesamte Koppelelement unter entsprechender Ausgleichbewegung der Arme vermittels einer teleskopierbaren Antriebswelle, die teilweise auch als vierte Achse bezeichnet wird, gegenüber der Basis zu verdrehen. Damit einhergehend ist jedoch der Nachteil eines nur eingeschränkten Drehwinkels des Koppelelements. Die Einschränkung ergibt sich durch das Erreichen von Endanschlägen der gelenkigen Verbindungen der Oberarme und/oder des Koppelelements mit den Unterarmen und/oder dem gegenseitigen Kontakt benachbarter Unterarme.

Durch die DE 10 2010 007 631 A1 ist ein Parallelroboter gemäß dem Oberbegriff des Anspruchs 1, mit einem Handgelenkabschnitt mit drei Freiheitsgraden offenbart. Der Parallelroboter umfasst einen Basisabschnitt und einen gegenüber dem Basisabschnitt bewegbaren Abschnitt, zwischen welchen ein Antriebsmechanismus für den bewegbaren Abschnitt vorgesehen ist. Zudem ist am bewegbaren Abschnitt ein Handgelenkabschnitt vorgesehen, welches ein erstes, zweites, drittes und viertes Rotationselement umfasst. Die Rotationselemente sind jeweils um unterschiedliche Achsen drehbar. Der Antriebsmechanismus für den bewegbaren Abschnitt umfasst drei Gestängestrukturen, welchen jeweils drei Servomotoren für den Antrieb der jeweiligen Gestängestrukturen zugeordnet sind. Jede Gestängestruktur umfasst ein Antriebsgestänge, das mit dem Basisabschnitt und dem Antriebsteil eines jeweiligen Servomotors verbunden ist.

Durch die KR 101 483 081 B1 ist ein weiterer Parallelkinematikroboter mit einer stationären Basis und einem gegenüber der stationären Basis beweglichen Abschnitt offenbart. Zwischen der stationären Basis und dem beweglichen Abschnitt sind drei Gelenkabschnitte vorgesehen, welche jeweils über Servomotoren angesteuert werden. Zwischen der stationären Basis und dem beweglichen Abschnitt sind zudem Antriebswellen vorgesehen. Am beweglichen Abschnitt kann ein Handgelenkabschnitt vorgesehen sein, welcher über Wellen mit den Antriebswellen verbunden ist, so dass der Handgelenkabschnitt rotierend angetrieben wird.

Durch die US 2015/0073597 A1 ist ein Roboter offenbart, welcher eine Basiskomponente, eine mobile Plattform und eine Translationsanordnung umfasst, wobei die Translationsanordnung mit der Basiskomponente und der mobilen Plattform funktional verbunden ist. Die Translationsanordnung umfasst mindestens drei unabhängig voneinander bewegliche Aktuatorarme, von denen jeder separat mit der mobilen Plattform verbunden ist. Die Translationsanordnung kann mindestens drei Motoren umfassen, die jeweils mit den Aktuatorarmen wirkverbunden sind. Ferner ist eine Werkzeuganordnung vorgesehen, welche an der mobilen Plattform verbunden ist.

Aus der DE 10 2010 006 155 A1, aus der DE 10 2013 208 082 A1 sowie aus der US 8 210 068 B1 sind jeweils unterschiedliche Handhabungseinrichtung mit Tripoden bekannt.

Was bei solchen bekannten Parallelkinematik-Robotern teilweise auch als Bewegungen um eine fünfte Achse bezeichnet wird, kann bspw. Zustell- und Öffnungsbewegungen von Greifbacken meinen, die an dem um die sog. vierte Achse rotierbaren Manipulator bzw. Werkzeughalter angeordnet sind. Bei einigen Ausführungsvarianten ist zumindest die Drehachse zentral mittig zu einer Aufhängung angeordnet, an der die Stellarme verankert sind, wobei über eine teleskopierbare Kardan-Drehmoment-Welle der Werkzeugträger verdreht wird. Unterhalb des rotierenden Werkzeugträgers befindet sich dann ein Greifer, dessen Achse zur Klemmung von Gebinden oder Stückgütern von einem mitfahrenden Motor angetrieben wird. Bei einer weiteren Ausführungsvariante ist diese vierte zentrale Drehwelle so großvolumig ausgeführt, dass in deren Hohlraum weitere gestellfeste Antriebsachsen Platz finden, die über weitere teleskopierbare Kardan-Drehmoment-Wellen am Werkzeugträger Werkzeugbewegungen wie z.B. das Klemmen eines Werkstücks mit Klemmbacken ausführen können.

Einen als Parallelkinematik-Roboter ausgebildeten Industrieroboter mit einer äußeren Kardanwelle und einer innenliegend geführten inneren Kardanwelle offenbart die WO 2014/053115 A1.

Um mit solchen Parallelkinematik-Robotern möglichst hohe Leistungen und möglichst geringe Zykluszeit zu erreichen, ist es vorteilhaft, wenn alle bewegten Massen der Einzelkomponenten des Parallelkinematik-Roboters (Quadro-, Tri- oder Duopod) möglichst gering gehalten werden; dies gilt auch für die Antriebs- bzw. Kardanwellen. Nachteilig ist beim Prinzip der innenliegenden Kardanwellen, dass die äußere Hohlwelle mit der teleskopierbaren Kardan-Drehmoment-Welle vom Durchmesser her vergleichsweise groß gehalten werden muss, obwohl die erforderlichen Drehmomente eine wesentlich kleinere Dimensionierung zulassen würden. Ebenso sind aufwendige Hohlwellen-Getriebe an der Basis des Roboters erforderlich, um die konzentrische Anordnung zu ermöglichen. Günstiger wäre es dagegen, wenn die Dimension aller Kardanwellen so gering wie möglich ausgeführt werden kann, um die Massen gering zu halten.

Insbesondere angesichts der letztgenannten Problematiken und Risiken kann ein vorrangiges Ziel der vorliegenden Erfindung darin gesehen werden, einen einfach aufgebauten Parallelkinematik-Roboter mit mehreren Antriebswellen mit großem Verdrehwinkel zwischen einer Basis oder Aufhängung und einem an den Stellarmen beweglich aufgehängten Manipulator oder Werkzeugträger auszustatten, die jeweils unterschiedliche Antriebsaufgaben erfüllen, wobei auf eine Hohlwellenkonstruktion verzichtet werden kann. Ein weiteres Ziel der Erfindung besteht darin, ein in entsprechender Weise verbessertes Verfahren zur Handhabung und/oder Steuerung eines solchen Parallelkinematik-Roboters vorzuschlagen, bei dem mittels wenigstens zwei separaten Antriebswellen die gewünschten Bewegungen und Handhabungsaufgaben eines Manipulators oder Werkzeugträgers durchgeführt werden können.

Das erstgenannte Ziel der Erfindung wird mit dem Gegenstand des unabhängigen Anspruchs 1 erreicht. Merkmale vorteilhafter Weiterbildungen der Erfindung finden sich in den davon abhängigen Ansprüchen. So schlägt die vorliegende Erfindung zur Erreichung des genannten Ziels einen Parallelkinematik-Roboter mit den Merkmalen des unabhängigen Anspruchs 1 vor, der vielfältigen Einsatzzwecken dienen kann. So kann der erfindungsgemäße Parallelkinematik-Roboter bspw. für die Handhabung, das Stapeln und/oder das Manipulieren von Artikeln, Gruppierungen, Gebinden, Stückgütern, Gebinde- und/oder Stückgutlagen oder dergleichen eingesetzt werden. Der erfindungsgemäße Parallelkinematik-Roboter kann jedoch ebenso der Führung wenigstens eines Werkzeuges dienen, das bspw. Fertigungs-, Handhabungs- und/oder Manipulationszwecken dienen kann. So kann der Parallelkinematik-Roboter bspw. zur Führung von Fertigungswerkzeugen, Schweißwerkzeugen, Niet- oder sonstigen Fügewerkzeugen in einer Fertigungsumgebung eingesetzt werden.

Der erfindungsgemäße Parallelkinematik-Roboter, der-je nach Anzahl der miteinander gekoppelten Stellarme - auch als Tripod, als Duopod oder als Quadpod bzw. Quattropod bezeichnet werden kann, umfasst eine Aufhängung oder Basis, an welcher wenigstens zwei separat angetriebene und unabhängig voneinander bewegbare Stellarme gelenkig befestigt bzw. gelagert sind. Bei der Aufhängung kann es sich insbesondere um eine obere Aufhängung bzw. um ein Rahmengestell handeln, von dem aus die Stellarme jeweils nach unten in Richtung eines unterhalb der Aufhängung befindlichen Arbeitsraumes reichen, während es sich bei der Basis insbesondere um eine untere Basis handeln kann, von der aus die Stellarme jeweils nach oben in Richtung eines oberhalb der Basis befindlichen Arbeitsraumes reichen.

Jeder der wenigstens zwei Stellarme ist durch wenigstens zwei relativ zueinander schwenkbare Armabschnitte gebildet, wobei die wenigstens zwei zueinander schwenkbaren Armabschnitte jedes der wenigstens zwei Stellarme durch einen schwenkbar an der Aufhängung oder Basis angelenkten und mittels Antrieb bewegbaren Oberarm und einen gelenkig am Oberarm angelenkten Unterarm gebildet sind. Der Parallelkinematik-Roboter umfasst zudem einen an den Unterarmen der wenigstens zwei Stellarme gelenkig gelagerten und mittels Bewegungen der Stellarme innerhalb eines definierbaren Bewegungsraumes bewegbaren Manipulator und/oder Werkzeughalter oder Werkzeugkopf. Der Bewegungsraum kann bedarfsweise durch Veränderungen der Schwenkbereiche der angetriebenen Oberarme, durch Positionsveränderungen der oberen oder unteren Aufhängung bzw. Basis sowie auch durch relative Positionsveränderungen der Aufhängungen bzw. Anlenkungen der Oberarme zueinander variiert werden. Somit ist vorgesehen, dass die Unterarme jeweils eine mechanische Verbindung zwischen dem Manipulator und/oder Werkzeughalter oder Werkzeugkopf und den Oberarmen herstellen.

Weiterhin weist der Manipulator und/oder Werkzeughalter oder Werkzeugkopf einen mittels eines ersten mechanischen Drehübertragungselementes gegenüber der Aufhängung oder Basis bzw. gegenüber den Stellarmen rotierbaren Abschnitt auf. Diesem rotierbaren Abschnitt, der durch eine Werkzeugplatte oder ein geeignetes Anschlusselement zur Aufnahme von Werkzeugen, Aktoren oder Stellelementen ist/sind wenigstens ein weiterer Aktor und/oder ein weiteres bewegliches Stellelement zugeordnet, dessen Stellbewegungen von einem zweiten mechanischen Drehübertragungselement steuerbar sind. Bei diesem weiteren Aktor oder Stellelement kann es sich etwa um einen Greifer mit gegeneinander zustellbaren Greifbacken handeln, mit dem bspw. Gebinde, Stückgüter etc. erfasst, aufgenommen, gedreht oder anderweitig gehandhabt bzw. manipuliert werden können. Das erste mechanische Drehübertragungselement und das zweite mechanische Drehübertragungselement stellen jeweils mechanische Drehantriebsverbindungen zwischen separaten Stellantrieben, die der Aufhängung oder Basis zugeordnet sind, und dem Manipulator und/oder Werkzeughalter oder Werkzeugkopf bzw. dessen/deren rotierbaren Abschnitt und/oder dessen/deren beweglichen und/oder angetriebenen Aktoren bzw. Stellelementen her. Zudem ist vorgesehen, dass das erste mechanische Drehübertragungselement sowie auch das zweite mechanische Drehübertragungselement jeweils durch separate und beabstandet voneinander angeordnete Wellen gebildet sind. Damit ist gemeint, dass das durch eine erste Welle gebildete erste mechanische Drehübertragungselement für eine Drehung des gegenüber der Aufhängung oder Basis bzw. gegenüber den Stellarmen rotierbaren Abschnittes sorgt, während das durch die zweite Welle gebildete mechanische Drehübertragungselement für Stellbewegungen, Werkzeug- und/oder Aktorbewegungen des weiteren Aktors oder Stellantriebes bzw. der Stellelemente sorgt.

Wenn im vorliegenden Zusammenhang generell von zwei Antriebs- oder Gelenkwellen die Rede ist, so ist dies keineswegs einschränkend zu verstehen, da wahlweise auch drei, vier oder mehr solcher separater Wellen bzw. Antriebs- oder Gelenkwellen zwischen der Basis oder Aufhängung des Parallelkinematik-Roboters und dem an den Stellarmen beweglich aufgehängten Manipulator, Werkzeugkopf oder Werkzeugträger angeordnet sein können, die für die unterschiedlichsten Antriebsund/oder Stellaufgaben eingesetzt werden können. Wenn zudem meist von teleskopierbaren Wellen oder von Kardanwellen die Rede ist, so ist dies ebenfalls nicht einschränkend zu verstehen, da die zwischen der in aller Regel ortsfest angeordneten Basis oder Aufhängung für die Stellarme und dem beweglichen Manipulator, Werkzeughalter oder Werkzeugkopf verlaufenden Wellen grundsätzlich auch als sog. biegsame Wellen ausgebildet sein können. Anstelle von Wellen mit Kardangelenken können bspw. auch Wellen mit homokinetischen Gelenken eingesetzt werden. Wenn somit im Zusammenhang der vorliegenden Beschreibung von Gelenkwellen oder Kardanwellen die Rede ist, so sollen generell auch abweichende Bauarten von dieser Begrifflichkeit mitumfasst sein, wie etwa solche Wellen mit homokinetischen Gelenken.

Sowohl das erste mechanische Drehübertragungselement als auch das zweite mechanische Drehübertragungselement können gemäß einer bevorzugten Ausführungsvariante des erfindungsgemäßen Parallelkinematik-Roboters jeweils durch separate und beabstandet voneinander angeordnete Gelenkwellen gebildet sein. Hierbei verlaufen die beiden Wellen vorzugsweise nebeneinander und sind jeweils durch teleskopierbare und mit Gelenken ausgestattete starre Wellenabschnitte gebildet, so dass die Dreh- und Stellbewegungen in gewünschter Weise von der Aufhängung oder Basis auf den Manipulator bzw. Werkzeughalter oder Werkzeugkopf übertragen werden können. Wie erwähnt, können die beiden Wellen - wahlweise auch drei oder vier separate Wellen - auch als biegsame Wellen o. dgl. ausgebildet sein.

Bei dem erfindungsgemäßen Parallelkinematik-Roboter steht die erste Welle bzw. Gelenkwelle vorzugsweise in Drehverbindung mit dem rotierbaren Abschnitt des Manipulators und/oder Werkzeughalters oder Werkzeugkopfes. Die erste Welle kann sowohl an der Aufhängung oder Basis wie auch am Manipulator bzw. Werkzeughalter oder Werkzeugkopf jeweils definierte Anschlüsse bzw. Drehverbindungen aufweisen. Die zweite Welle bzw. Gelenkwelle kann vorzugsweise mit einem Stellantrieb für den weiteren Aktor bzw. das weitere bewegliche Stellelement in Drehverbindung stehen. Diese Drehverbindung kann bspw. ein Zahnradgetriebe o. dgl. umfassen, das z.B. einen Greifer antreibt bzw. das zum Öffnen und Schließen der Greifbacken des Greifers verantwortlich ist.

Bei der genannten Anordnung zweier parallel oder je nach Drehlage des rotierbaren Abschnittes des Manipulators und/oder Werkzeughalters oder Werkzeugkopfes winkelig oder teilweise verschränkt zueinander stehenden Wellen oder Gelenkwellen ist naturgemäß der maximal erzielbare Drehwinkel in beide Drehrichtungen eingeschränkt, da die Wellen beim Überschreiten des maximal erzielbaren Drehwinkels kollidieren. Bei der Verwendung von biegsamen Wellen sind naturgemäß die erzielbaren maximalen Drehwinkel des rotierbaren Abschnittes des Manipulators und/oder Werkzeughalters oder Werkzeugkopfes in beide Drehrichtungen größer, doch sind auch hier die Drehwinkel begrenzt, da sich zumindest die zweite biegsame Welle, die sich in diesem Fall um die erste Welle legt, nicht beliebig dehnen lässt. Allerdings sind die erreichbaren maximalen Drehwinkel, die in aller Regel aus einer neutralen Mittellage mit ungefähr parallelen Wellen in beide Drehrichtungen einen Drehwinkel von jeweils mindestens 90 bis 100 Grad erlauben, für die meisten Anwendungsfälle völlig ausreichend, so dass sich dadurch keine praktischen Einschränkungen ergeben. Diesen Einschränkungen in den maximalen Drehwinkeln, die angesichts der praktischen Handhabungs- und Manipulationsaufgaben, die an solche Parallelkinematik-Roboter zu stellen sind, eher als theoretisch bezeichnet werden können, stehen jedoch ausgeprägte Vorteile gegenüber, da die eingesetzten Wellen bzw. Gelenkwellen exakt so dimensioniert werden können, dass sie den auftretenden Belastungen standhalten. Auf eine Überdimensionierung, die zu einem unerwünschten Mehrgewicht sowie auch zu vermeidbaren Mehrkosten führen würde, kann hierdurch verzichtet werden. Die Antriebswellen oder Gelenkwellen können relativ dünn und damit auch sehr leicht ausgeführt werden, was erhebliche Vorteile hinsichtlich der erforderlichen Antriebsleistungen für die Stellarme mit sich bringt.

Bei dem Parallelkinematik-Roboter kann vorzugsweise im Manipulator und/oder Werkzeughalter oder Werkzeugkopf ein Zahnradgetriebe zur Ubertragung der Rotation der ersten Welle oder Gelenkwelle in eine synchrone oder übersetzte Drehbewegung des rotierbaren Abschnittes des Manipulators und/oder Werkzeughalters oder Werkzeugkopfes angeordnet sein. Dieses Zahnradgetriebe kann bspw. als Planetengetriebe ausgebildet sein, dessen wenigstens eines Sonnenrad - ggf. können auch mehrere Sonnenräder vorhanden sein - in Drehverbindung mit der ersten Welle bzw. Gelenkwelle steht und sich im Verzahnungseingriff mit einem Hohlrad befindet, das den weiteren Aktor bzw. das weitere bewegliche Stellelement antreibt bzw. das z.B. die Greifbacken o. dgl. dreht.

Der zweiten Welle bzw. Gelenkwelle ist erfindungsgemäß im Bereich der Aufhängung bzw. der Basis eine an Rotationsbewegungen der ersten Welle bzw. Gelenkwelle gekoppelte, mitdrehende Lagerung zugeordnet. Dabei weist die zweite Welle einen der Aufhängung oder Basis zugeordneten mitdrehenden Anschluss bzw. eine mitdrehende Lagerung auf. Diese Lagerung der zweiten Welle bzw. Gelenkwelle kann bspw. über ein Zahnradgetriebe oder ein Zugmittelgetriebe annähernd konzentrisch zu Rotationsbewegungen der ersten Welle bzw. Gelenkwelle mitrotieren. So kann der zweiten Welle z.B. eine Zahnradübersetzung, ein Zahnriemen o. dgl. Zugmittel zugeordnet sein, der/das mit den Drehbewegungen, die durch die erste Welle induziert werden, umläuft und die gesamte Aufhängung für die zweite Welle mitrotieren lässt. Mit dieser optionalen Ausführungsvariante sind größere Drehwinkel als bei der vorher beschriebenen Ausführungsvariante mit den ortsfest gelagerten Wellen möglich, was für manche Anwendungsfälle vorteilhaft sein kann.

Den ersten und zweiten Wellen bzw. Gelenkwellen des erfindungsgemäßen Parallelkinematik-Roboters sind sinnvollerweise jeweils separate Drehantriebe zugeordnet, wobei diese separaten Drehantriebe bspw. als Hohlwellen-Kombigetriebe oder als separate Motor-Getriebe-Einheiten angeordnet bzw. ausgebildet sein können. Als separate Drehantriebe kommen etwa auch Elektroantriebe in Frage, die der oberen Basis oder Aufhängung zugeordnet bzw. dort montiert sind. Allerdings sind auch andere Antriebsvarianten denkbar, so etwa hydraulische oder pneumatische Antriebe.

Wie erwähnt, kann der erfindungsgemäße Parallelkinematik-Roboter der Handhabung, zum Stapeln und/oder zum Manipulieren von Artikeln, Gruppierungen, Gebinden, Stückgütern, Gebinde- und/oder Stückgutlagen oder dergleichen dienen, wobei der Manipulator und/oder der Werkzeughalter oder Werkzeugkopf ein Mittel oder mehrere Mittel zum Greifen und/oder Handhaben der Artikel, Gruppierungen, Gebinde, Stückgüter, Gebinde- und/oder Stückgutlagen und/oder ein Fertigungs- oder Montagewerkzeug umfassen kann und mit den Unterarmen der wenigstens zwei Stellarme mechanisch gekoppelt sein, so dass durch eine Bewegung eines oder mehrerer der wenigstens zwei Stellarme eine Position des Manipulators und/oder des Werkzeughalters oder Werkzeugkopfes vorgegeben werden kann.

Zur Erreichung des oben genannten Ziels schlägt die vorliegende Erfindung zudem ein Verfahren mit den Merkmalen des unabhängigen Verfahrensanspruchs 10 vor. Dieses Verfahren dient dem Betreiben und/oder der Handhabung eines Parallelkinematik-Roboters, der insbesondere gemäß einer der zuvor beschriebenen Ausführungsvarianten aufgebaut bzw. ausgestattet sein kann. Der Parallelkinematik-Roboter umfasst zumindest eine Aufhängung oder Basis, an welcher wenigstens zwei separat angetriebene und unabhängig voneinander bewegbare Stellarme gelenkig befestigt bzw. gelagert sind, die jeweils durch einen mittels Antrieb bewegbaren Oberarm und einen gelenkig daran gelagerten Unterarm gebildet sind, sowie einen an den Unterarmen der wenigstens zwei Stellarme gelenkig gelagerten und mittels Bewegungen der Stellarme innerhalb eines definierbaren Bewegungsraumes bewegbaren Manipulator und/oder Werkzeughalter oder Werkzeugkopf. Der Manipulator und/oder Werkzeughalter oder Werkzeugkopf weist einen mittels eines ersten mechanischen Drehübertragungselementes gegenüber der Aufhängung oder Basis bzw. gegenüber den Stellarmen rotierbaren Abschnitt auf, wobei diesem rotierbaren Abschnitt des Manipulators und/oder Werkzeughalters oder Werkzeugkopfes wenigstens ein weiterer Aktor und/oder ein weiteres bewegliches Stellelement zugeordnet ist, dessen Stellbewegungen von einem zweiten mechanischen Drehübertragungselement steuerbar sind. Das erste mechanische Drehübertragungselement und das zweite mechanische Drehübertragungselement stellen jeweils mechanische Drehantriebsverbindungen zwischen separaten Stellantrieben, die der Aufhängung oder Basis zugeordnet sind, und dem Manipulator und/oder Werkzeughalter oder Werkzeugkopf bzw. dessen/deren rotierbaren Abschnitt und/oder dessen/deren beweglichen und/oder angetriebenen Aktoren bzw. Stellelementen her. Zudem ist vorgesehen, dass das erste mechanische Drehübertragungselement und das zweite mechanische Drehübertragungselement jeweils durch separate und beabstandet voneinander angeordnete Wellen gebildet sind. Erfindungsgemäß sieht das Verfahren vor, dass bei einer durch Drehung der ersten Welle induzierten Rotation des rotierbaren Abschnittes des Manipulators und/oder Werkzeughalters oder Werkzeugkopfes die zweite Welle zumindest teilweise mit bzw. gegenüber der ersten Welle verschränkt wird und/oder sich mit deren Rotation zumindest teilweise konzentrisch zu dieser mitdreht.

Bei dem Verfahren kann weiterhin vorgesehen sein, dass das erste mechanische Drehübertragungselement und das zweite mechanische Drehübertragungselement jeweils durch separate und beabstandet voneinander angeordnete Gelenkwellen gebildet sind, wobei die erste Welle bzw. Gelenkwelle den rotierbaren Abschnitt des Manipulators und/oder Werkzeughalters oder Werkzeugkopfes dreht, und wobei die zweite Welle bzw. Gelenkwelle einen Stellantrieb für den weiteren Aktor bzw. das weitere bewegliche Stellelement betätigt.

Ein erfindungsgemäßer Parallelkinematik-Roboter gemäß einer der zuvor beschriebenen Ausführungsvarianten kann bspw. als Industrieroboter zur Handhabung, zum Stapeln und/oder zum Manipulieren von Artikeln, Gruppierungen, Gebinden, Stückgütern, Gebinde- und/oder Stückgutlagen oder dergleichen Gegenständen im Zusammenhang mit dem Transport und Beförderung, der Verarbeitung, der Verpackung und/oder der Palettierung der Artikel, Gruppierungen, Gebinde, Stückgüter und/oder Gebinde- und/oder Stückgutlagen eingesetzt werden.

Ein erfindungsgemäßer Parallelkinematik-Roboter gemäß einer der zuvor beschriebenen Ausführungsvarianten kann bspw. auch als Industrieroboter zur Führung wenigstens eines Werkzeuges im Zusammenhang mit der Fertigung, Mittel- und/oder Beschichtungsapplikation, Montage, Manipulation und/oder Handhabung in einer Fertigungs- und/oder Industrieumgebung eingesetzt und verwendet werden.

Nachfolgend finden sich zusammenfassend die wichtigsten Aspekte der vorliegenden Erfindung; zudem wird auf einige Ausführungsvarianten hingewiesen. Bei einer ersten Ausführungsvariante sind zwei Kardanwellen zwischen einer Aufhängung und dem Manipulator des erfindungsgemäßen Parallelkinematik-Roboters angeordnet, die nebeneinander verlaufen. Die Kardanwelle zur Übertragung der Drehbewegung der Werkzeugplatte ist dabei ungefähr mittig am Werkzeugträger angeordnet, die Kardanwelle zur Übertragung des Drehmoments der Klemmgreifer-Betätigung sitzt außermittig und treibt ein Antriebsrad im Werkzeugträger an, das die Rotationsbewegung in eine Linearbewegung der Greiferklemmbacken umwandelt. Erfindungsgemäß eignet sich bspw. ein rotierendes Satelliten-Flachgetriebe zur Realisierung größerer Drehwinkel. Hierbei kann sich ein rotierendes Flachgetriebe unterhalb der Roboterbasis befinden, so dass die Kardanwelle für die Betätigung der Klemmachsen auf einer Radiusbahn um die zentrale Kardanwelle für die Drehbewegung des Werkzeugträgers kreist. Dieses Flachgetriebe kann auch als Riemenstufe ausgebildet sein, die um die zentrische Drehachse rotiert. Wahlweise kann auch eine Zahnriemenstufe im Werkzeugträger vorgesehen sein. Der Antrieb der Drehachse kann hierbei bspw. über eine Zahnradstufe (Sonnenrad) erfolgen, die einen drehbar gelagerten Außenring (Hohlrad) verdreht.

Die Vorteile der Erfindung liegen insbesondere in den deutlich reduzierten Massen der verwendeten Wellen bzw. Gelenkwellen. Es können zudem einfacher aufgebaute Wellen verwendet werden; auf Hohlwellen kann verzichtet werden. Aufgrund der eingesparten Hohlwelle, die einen erheblichen Platzbedarf hat, kann die Bauhöhe des Parallelkinematik-Roboters reduziert werden. Außerdem kann auf aufwendige Hohlgetriebe und Vorgelegestufen verzichtet werden, wodurch sich die Herstellkosten reduzieren lassen.

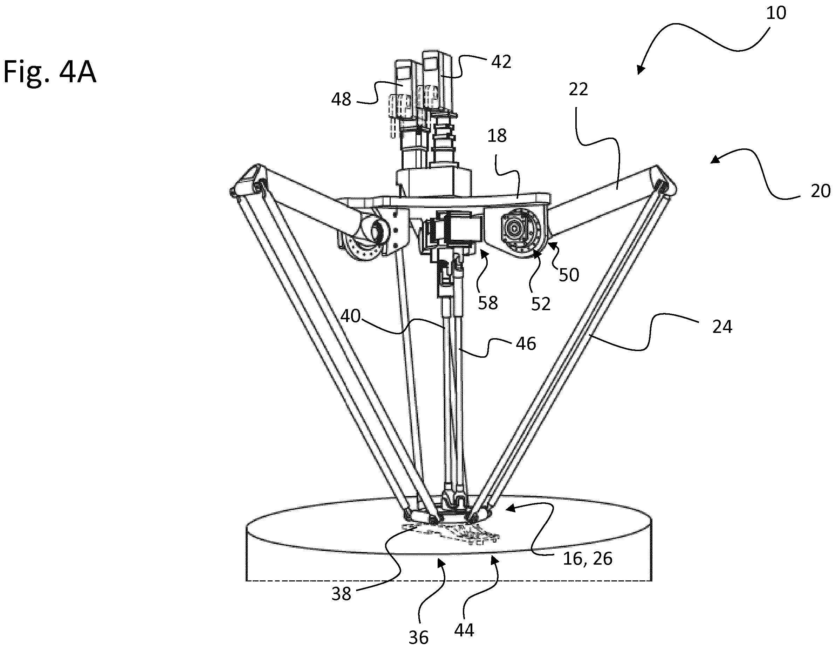

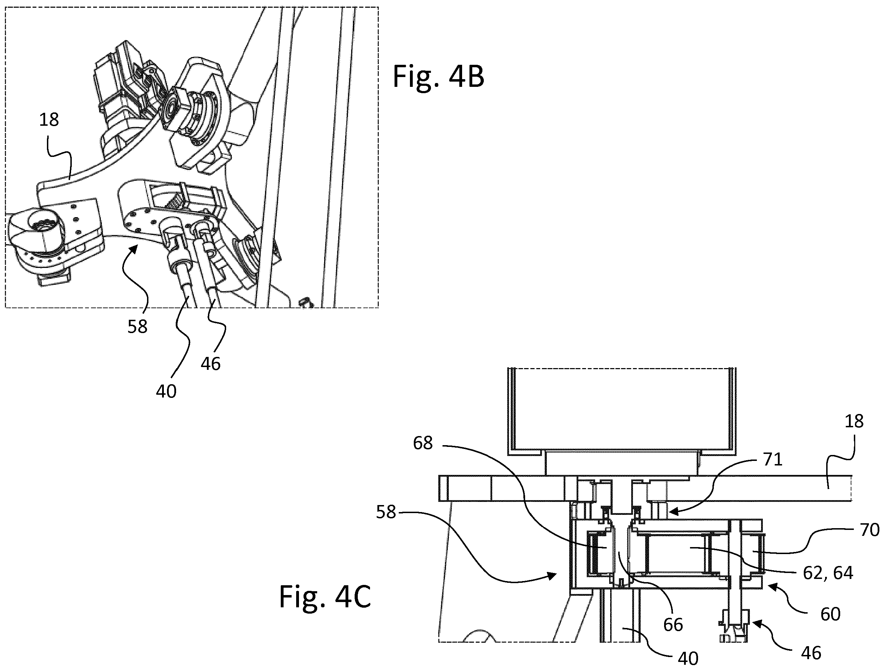

Im Folgenden sollen die Erfindung und ihre Vorteile anhand der beigefügten Figuren näher erläutert werden, wobei zu beachten ist, dass lediglich die Figuren 4A, 4B und 4C Ausführungsformen der Erfindung zeigen. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht ein Beispiel eines Parallelkinematik-Roboters, der bspw. zur Handhabung und/oder zum Manipulieren von Artikeln, Gruppierungen, Gebinden oder Stückgütern eingesetzt werden kann.
Fig. 2 zeigt eine schematische Perspektivansicht des mit drei beweglichen Stellarmen ausgestatteten Parallelkinematik-Roboters gemäß Fig. 1.
Fig. 3 zeigt in drei schematischen Ansichten (Fig. 3A, Fig. 3B und Fig. 3C) verschiedene Betriebszustände des Parallelkinematik-Roboters gemäß Fig. 2.
Fig. 4 zeigt in drei schematischen Ansichten (Fig. 4A, Fig. 4B und Fig. 4C) verschiedene Ausführungsvarianten des Parallelkinematik-Roboters gemäß Fig. 2, der mit einer zusätzlichen Getriebestufe ausgestattet ist.
Fig. 5 zeigt eine schematische Draufsicht auf ein Planetengetriebe zur Realisierung von Rotationsbewegungen eines Anschlusselements innerhalb eines Manipulators des Parallelkinematik-Roboters gemäß Fig. 2.

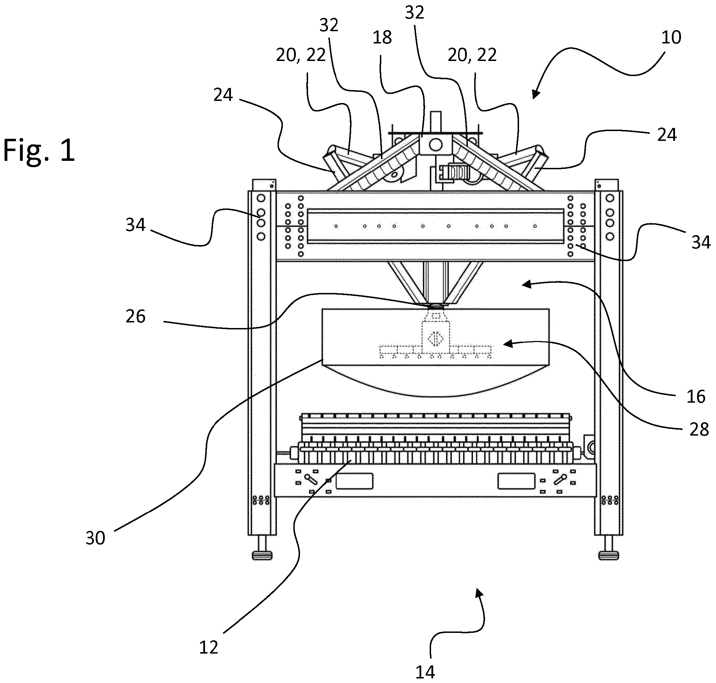

Für gleiche oder gleich wirkende Elemente der Erfindung werden in den Figuren 1 bis 5 meist identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

Einleitend sei an dieser Stelle darauf hingewiesen, dass die Figuren 1 bis 5 sich auf einen Deltakinematik-Roboter oder Parallelkinematik-Roboter mit drei gleichartigen Schwenkarmen bzw. auf einen sog. Deltaroboter oder auch sog. Tripod beziehen, der Teil einer Handhabungseinrichtung bzw. eines Manipulators zur Handhabung, zum Drehen, Verschieben oder Aufnehmen von Artikeln, Stückgütern oder Gebinden sein kann. Hinsichtlich einer möglichen Ausgestaltung des Deltakinematik-Roboters, Deltaroboters bzw. Tripods, seines Aufbaus, seiner Funktionsweise und seines Bewegungsraumes sei insbesondere auf den Offenbarungsgehalt der DE 10 2013 106 004 A1 verwiesen, auf deren gesamten Inhalt hiermit ausdrücklich Bezug genommen wird. Auf eine detaillierte Beschreibung der Bewegungsmodi, der Antriebe für die drei Schwenkarme etc. soll deshalb an dieser Stelle verzichtet werden. Grundsätzlich könnte der Parallelkinematik-Roboter 10 gemäß Figuren 1 bis 5 auch vier gleichartige Schwenkarme aufweisen, was auch als sog. Quadpod bezeichnet werden kann. Auch Varianten mit nur zwei Stellarmen - sog. Duopods - sind grundsätzlich denkbar und für manche Anwendungsfälle gebräuchlich. Auch können die Schwenk- oder Stellarme von einer unteren Basis nach oben ragen, so dass sich ein an den Unterarmen aufgehängter Werkzeugkopf zwischen den nach unten abgeknickten Unterarmen befindet, die jeweils an den nach oben ragenden Oberarmen schwenkbar aufgehängt sind.

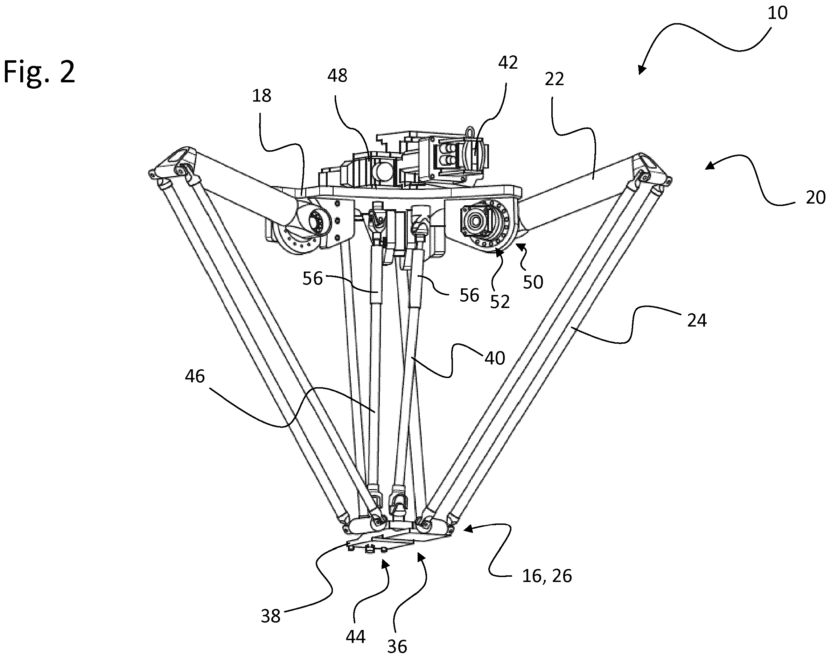

Die schematische Darstellung der Fig. 1 zeigt eine denkbare Ausgestaltung eines Parallelkinematik-Roboters 10 zur Handhabung und/oder zum Manipulieren von hier nicht dargestellten Artikeln, Gruppierungen, Gebinden, Stückgütern oder dergleichen, die je nach Ausführungsvariante wahlweise auch zum Handhaben und/oder zum Manipulieren von Stückgut- und/oder Gebindegruppierungen bzw. auch von Stückgut- und/oder Gebindelagen eingesetzt werden kann. Wahlweise kann der Parallelkinematik-Roboter 10 auch zur beweglichen Steuerung eines Füge- und/oder Fertigungswerkzeuges o. dgl. eingesetzt werden. Die Detailansicht der Fig. 2 lässt einige der Komponenten des Parallelkinematik-Roboters 10 deutlicher erkennen; zudem lässt die Fig. 2 noch deutlicher als die Fig. 1 erkennen, dass es sich bei dem ParallelkinematikRoboter 10 um einen Roboter bzw. Deltakinematik-Roboter 10 mit drei gleicharmigen Stellarmen 20 handelt.

Die in den Figuren 1 bis 5 nicht dargestellten Artikel, Gruppierungen, Gebinde oder Stückgüter oder Lagen mit Stückgütern oder Gebinden stehen insbesondere auf einer Auflageebene und/oder einem Förderabschnitt 12 einer Vorrichtung 14 zur Handhabung, Förderung, Gruppierung und/oder Verpackung von Artikeln, Stückgütern, Gruppierungen und/oder Gebinden bzw. werden auf dieser Auflageebene oder dem Förderabschnitt 12 insbesondere in horizontaler Richtung bewegt. Der als Greif- und/oder Manipulationseinheit 16 ausgebildete bzw. eine solche Manipulationseinheit 16 aufweisende Roboter 10 ist oberhalb der Auflageebene und/oder dem Förderabschnitt 12 angeordnet und umfasst eine obere Aufhängung 18, an der drei separat angetriebene Stellarme 20 gelenkig befestigt bzw. gelagert sind. Jeder dieser drei Stellarme 20 ist durch zwei relativ zueinander schwenkbare Armabschnitte 22 und 24 gebildet, nämlich jeweils durch einen Oberarm 22, der um eine horizontale Schwenkachse beweglich ist und an der oberen Aufhängung 18 gelenkig und motorisch angetrieben aufgehängt ist, sowie durch einen Unterarm 24, der gelenkig mit dem Oberarm 22 verbunden ist und nach unten führt, so dass sich alle drei Unterarme 24 in einem unteren Koppelabschnitt 26 treffen, dem sog. Werkzeugkopf, Werkzeugträger oder auch Tool-Center-Point bzw. TCP. Wie es die Fig. 2 näher verdeutlicht, sind die Unterarme 24 jeweils durch Strebenpaare gebildet, während die Oberarme 22 jeweils einteilig ausgebildet sind. An diesem unteren Werkzeugkopf, Werkzeugträger bzw. Koppelabschnitt 26 bzw. dem TCP befindet sich im gezeigten Ausführungsbeispiel der Fig. 1 eine separat aktivierbare Greifeinrichtung 28 mit einem Paar gegeneinander zustellbarer Greifbacken, das der Erfassung, dem Greifen und/oder Manipulieren der auf dem Förderabschnitt 12 befindlichen Artikel, Gruppierungen, Gebinde oder Stückgüter dient.

Der im vorliegenden Zusammenhang auch als Werkzeugkopf 26 oder Werkzeughalter bezeichnete und an den Unterarmen 24 aufgehängte Manipulator 16 des gezeigten Parallelkinematik-Roboters 10 kann wahlweise auch beliebige Fertigungs-, Füge-, Greif- und/oder Handhabungswerkzeuge aufweisen bzw. umfassen, die in einer Fertigungsumgebung zum Einsatz kommen können, ggf. in Zusammenwirkung mit weiteren solcher oder ähnlicher Roboter 10. Es sei an dieser Stelle nochmals betont, dass alle im vorliegenden Zusammenhang verwendeten Begriffe wie Manipulator 16, Werkzeughalter oder Werkzeugkopf 26 generell umfassend und nicht beschränkend im Sinne einer Greifeinrichtung 28 oder Haltevorrichtung o. dgl. zu verstehen sind. Grundsätzlich können am Manipulator 16 nahezu beliebige Werkzeuge angeordnet sein, die allesamt von der vorliegenden Erfindungsdefinition mit umfasst sind. Der Werkzeugkopf 26 oder Werkzeughalter, der in aller Regel den Manipulator 16 bildet oder Teil des Manipulators 16 ist, wird auch als TCP bzw. Tool Center Point 26 bezeichnet.

Wie dies bereits im Detail in der DE 10 2013 106 004 A1 beschrieben ist, kann jeder der drei Stellarme 20 in gewissen Grenzen, die durch den jeweiligen Schwenkradius definiert sind, unabhängig von den anderen Stellarmen 20 betätigt werden, wodurch sich eine freie Beweglichkeit des Manipulators 16 mitsamt seiner Greifeinrichtung 28 innerhalb eines definierten Bewegungsraumes 30 ergibt, wobei durch eine Bewegung eines oder mehrerer der insgesamt drei Stellarme 20 eine Position der Greifeinrichtung 28 innerhalb des Bewegungsraumes 30 vorgegeben werden kann. Dieser Bewegungs- oder Arbeitsraum 30 ist - bezogen auf den Tool-Center-Point 26 - in vertikaler Richtung bzw. in z-Richtung ein relativ flacher Zylinder, an dessen unteren Rand sich ein ebenfalls relativ flaches Kugelsegment anschließt, wie dies in Fig. 1 angedeutet ist.

Die obere Aufhängung 18 sieht im gezeigten Ausführungsbeispiel der Fig. 1 eine Abstützung über insgesamt vier schräge Stützträger 32 vor, die sich wiederum in einem Rahmengestell 34 der Vorrichtung 14 zur Handhabung, Förderung, Gruppierung und/oder Verpackung von Artikeln, Stückgütern, Gruppierungen und/oder Gebinden abstützen. Das Rahmengestell 34 kann bspw. ein starrer Stahlträgerrahmen o. dgl. mit verschraubten Vertikal- und Horizontalträgern sein, der im unteren Bereich den Horizontalförderabschnitt 12 aufnimmt. Der gezeigte Aufbau ist jedoch keinesfalls einschränkend zu verstehen, sondern liefert nur eine Ausführungsvariante einer Vielzahl möglicher bzw. sinnvoll realisierbarer Ausführungsvarianten zur Ausgestaltung der Vorrichtung, ihrer Einzelteile und der Rahmen- und Aufhängungsteile.

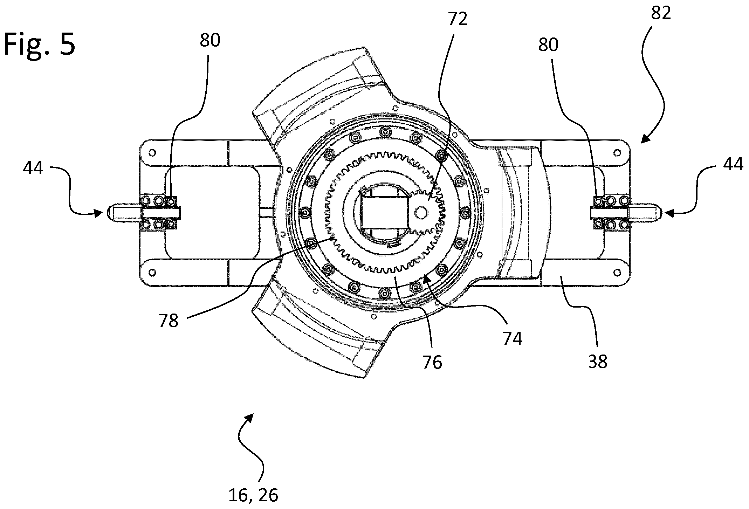

Wie es die perspektivische Detailansicht der Fig. 2 erkennen lässt, weist der Manipulator 16 bzw. der Werkzeugträger oder Werkzeugkopf 26 einen rotierbaren Abschnitt 36 auf, der im gezeigten Ausführungsbeispiel als Anschlusselement 38 ausgebildet ist, das der daran hängenden Aufnahme von Werkzeugen, Aktoren oder Stellelementen dient (vgl. hierzu Fig. 5). Der rotierbare Abschnitt 36 kann koaxial gegenüber dem Werkzeugkopf 26 verdreht werden. Um diese Drehungen auszulösen und die Drehwinkel vorzugeben, steht der rotierbare Abschnitt 36 mitsamt dem unterhalb des Werkzeugkopfes 26 befindlichen Anschlusselement 38 mit einer ersten Gelenkwelle 40 in Drehverbindung, die von der oberen Aufhängung 18 zum Werkzeugkopf 26 reicht, und die mittels eines ersten elektrischen Antriebsmotors 42 verdreht werden kann. Durch jede Drehwinkeländerung der ersten Gelenkwelle 40 wird gleichzeitig der rotierbare Abschnitt 36 mitsamt dem daran drehfest verankerten Anschlusselement 38 gegenüber dem Werkzeugkopf 26 um denselben Drehwinkel verdreht.

Das Anschlusselement 38 bildet nicht nur eine Aufhängung für Greiferarme, Werkzeuge, Manipulationselemente o. dgl., sondern trägt außerdem Aktoren oder Stellelemente 44 (hier nicht deutlich erkennbar), die bspw. durch gegeneinander zustellbare und öffenbare Greifbacken o. dgl. gebildet sein können, mittels derer Stückgüter, Gebinde oder einzelne Artikel gegriffen und mit dem am ParallelkinematikRoboter 10 beweglich aufgehängten Manipulator 16 aufgenommen, verschoben, gedreht, umgesetzt und wieder freigegeben werden können. Um diese Stellelemente 44 auf mechanischem Wege betätigen zu können, ist eine zweite Gelenkwelle 46 vorgesehen, die wie die erste Gelenkwelle 40 von der oberen Aufhängung 18 zum Werkzeugkopf 26 reicht, und die mittels eines zweiten elektrischen Antriebsmotors 48 verdreht werden kann und mit einem im rotierbaren Abschnitt 36 befindlichen Getriebe (nicht erkennbar) in Drehverbindung steht, welches wiederum auf die Stellelemente 44 wirkt und bspw. für deren oszillierende Linearbewegung sorgen kann, wenn die zweite Gelenkwelle 46 entsprechend verdreht wird.

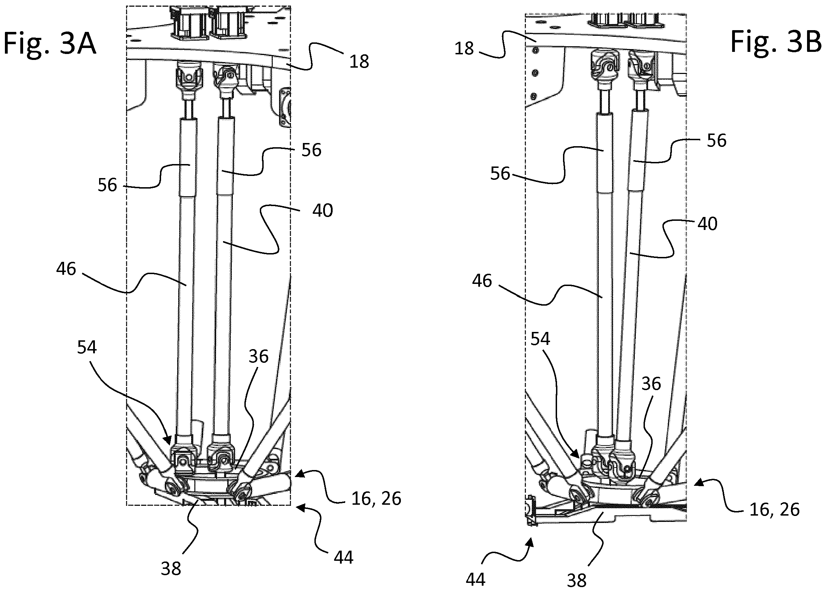

Wie es die Fig. 2 erkennen lässt, sind die ersten und zweiten Antriebsmotoren 42 und 48 auf der oberen Aufhängung 18 montiert, an deren Unterseite gelenkige Lagerungen 50 und elektrische Antriebsmotoren 52 für die Oberarme 22 der insgesamt drei Stellarme 20 angeordnet sind. Die beiden Gelenkwellen 40 und 46 sind in der oberen Aufhängung 18 gelagert und führen in etwa senkrecht nach unten zum Werkzeugkopf 26 bzw. zum darin drehbar gelagerten rotierenden Abschnitt 36. Die beiden Gelenkwellen 40 und 46 können in etwa parallel verlaufen, wobei sich diese parallele Ausrichtung je nach Verdrehwinkel der ersten Gelenkwelle 40 deutlich ändern und sich eine leicht verschränkte bzw. winkelige Ausrichtung zueinander einstellen kann, wie es die Figuren 3A bis 3C erkennen lassen.

Wie erwähnt, sorgt die erste Gelenkwelle 40 für eine Drehung des gegenüber dem Werkzeugkopf 26 rotierbaren Abschnittes 36, während die zweite Gelenkwelle 46 für Stellbewegungen, Werkzeug- und/oder Aktorbewegungen des weiteren Aktors oder Stellantriebes bzw. der in den Figuren 3A und 3B lediglich angedeuteten Stellelemente 44 sorgt. Die Fig. 3A zeigt einen Detailausschnitt des Roboters 10 mit diesen beiden Gelenkwellen 40 und 46, wobei zumindest die erste Gelenkwelle 40 nicht verdreht ist, so dass der rotierbare Abschnitt 36 mit dem daran befestigten Anschlusselement 38 gegenüber dem Werkzeugkopf 26 eine neutrale Mittelstellung einnimmt. Beide Gelenkwellen 40 und 46 verlaufen hierbei in etwa parallel und in etwa vertikaler Richtung zwischen der Aufhängung 18 und dem Werkzeugkopf 26 des Manipulators 16. Die zweite Gelenkwelle 46 kann beliebig verdreht sein, da die Stellelemente 44 völlig unabhängig vom eingestellten Drehwinkel der ersten Gelenkwelle 40 und des damit drehfest verbundenen rotierbaren Abschnittes 36 betätigbar sind. So können bspw. gegeneinander zustellbare Greifbacken, die am Anschlusselement 38 aufgehängt sind, mittels Drehungen der zweiten Gelenkwelle 46 geöffnet oder geschlossen werden, ohne dass die Greifbacken gleichzeitig durch Rotationen des Anschlusselements 38 verdreht werden müssen.

Die Fig. 3B zeigt hingegen einen mittels um knapp 90 Grad verdrehter erster Gelenkwelle 40 in gleichem Winkel innerhalb der Drehlagerung rotierten Abschnitt 36, mit dem zusammen das unterhalb des Werkzeugkopfes 26 befindliche Anschlusselement 38 um denselben Winkel verdreht ist. Da eine untere Drehdurchführung 54 für die zweite Gelenkwelle 46 ortsfest im rotierbaren Abschnitt 36 angeordnet ist, dreht sich diese zwangsläufig mit, was die in Fig. 3B deutlich erkennbare Verlagerung der zweiten Gelenkwelle 46 und die damit verbundene Winkeländerung und beginnende Verschränkung gegenüber der zuvor annähernd parallel stehenden ersten Gelenkwelle 40 verursacht. Bei einer weitergehenden Verdrehung des rotierbaren Abschnittes 36 mitsamt der unteren Drehdurchführung 54 für die zweite Gelenkwelle 46 würde diese ab einem gewissen Grenzwinkel mit der ersten Gelenkwelle 40 kollidieren und eine weitere Verdrehung aus mechanischen Gründen verhindern. Da die solchermaßen erzielbaren Drehwinkel jedoch in beide Richtungen, ausgehend von der in Fig. 3A angedeuteten neutralen Mittellage, jeweils mehr als 90 Grad betragen, so dass sich eine Gesamtverdrehung von mehr als 200 Grad realisieren lässt, genügen diese Verdrehwinkel für die meisten typischen Anwendungsfälle und lassen eine aufwendige Hohlwellenkonstruktion mit meist deutlich überdimensionierter äußerer Hohlwelle entbehrlich werden.

Um die deutlichen Längenänderungen beim Heben und Senken des Manipulators 16 bei den Schwenkbewegungen der Stellarme 20 ausgleichen zu können, sind die beiden Gelenkwellen 40 und 46 sinnvollerweise jeweils mit Schiebehülsen 56 ausgestattet, die eine weitgehend spielfreie Längenänderung ohne gleichzeitige Änderung des jeweiligen Verdrehwinkels der Wellen 40 und 46 erlauben.

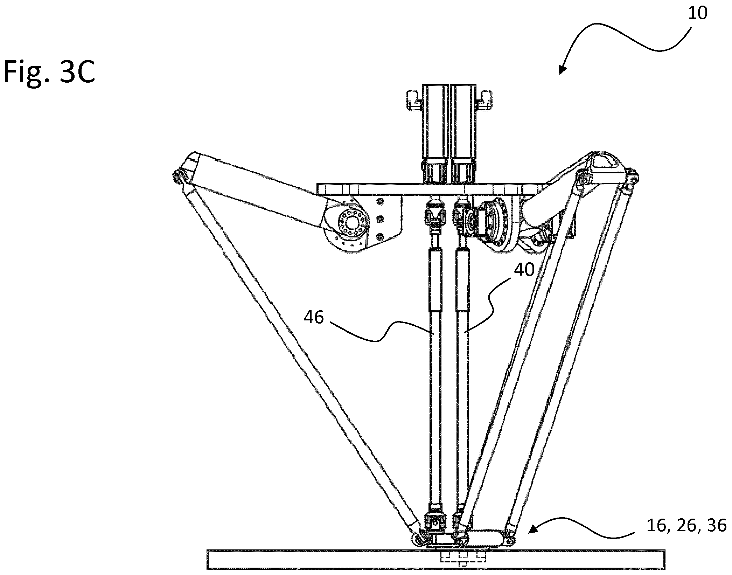

Die Fig. 3C zeigt nochmals eine Seitenansicht des Parallelkinematik-Roboters 10 in der in den Figuren 2, 3A und 3B gezeigten ersten Ausführungsvariante, bei dem sich die beiden Gelenkwellen 40 und 46 in etwa paralleler Ausrichtung und der rotierbare Abschnitt 36 innerhalb des Werkzeugkopfes 26 des Manipulators 16 in etwa in neutraler Mittellage befinden.

Die Figuren 4A, 4B und 4C zeigen dagegen Ausführungsformen des erfindungsgemäßen Parallelkinematik-Roboters 10, bei der die erste Gelenkwelle 40 wiederum ortsfest in der oberen Aufhängung 18 gelagert ist, wogegen die zweite Gelenkwelle 46 (in der Darstellung der Fig. 4A rechts) etwa gemäß Fig. 4A und Fig. 4B mittels eines Flachgetriebes 58 bzw. eines sog. Satelliten-Flachgetriebes 58 in der oberen Aufhängung 18 gelagert sein kann, so dass sie synchron mit den Drehungen der ersten Gelenkwelle 40 (in der Darstellung der Fig. 4A links) mitrotieren kann, wodurch die Verschränkungen der beiden Gelenkwellen 40 und 46, wie sie in Fig. 3B zu erkennen sind, weitgehend vermieden werden können. Mit Hilfe des gezeigten Flachgetriebes 58 können deutlich größere Verdrehwinkel als die zuvor erwähnten gut 180 Grad, die für die erste Ausführungsvariante gemäß Fig. 2 und Figuren 3A bis 3C gelten, realisiert werden. Im gezeigten Flachgetriebe 58 gemäß Fig. 4A und Fig. 4B können bspw. Zahnradkaskaden angeordnet sein, die eine Koppelung der Drehung der ersten Gelenkwelle 40 mit der Drehung der oberen Lagerung der zweiten Gelenkwelle 46 im Getriebe 58 bewirken, so dass diese obere Lagerung für die zweite Gelenkwelle 46 mit den Drehungen der ersten Gelenkwelle 40 rotieren kann, wobei sich die zweite Gelenkwelle 46 gleichzeitig unabhängig von diesen Rotationen um sich selbst drehen kann, was wiederum die von den Winkelstellungen des rotierbaren Abschnittes 36 unabhängigen Stellbewegungen der Stellelemente 44 bewirken kann.

Der Detail-Längsschnitt der Fig. 4C zeigt eine weitere Ausführungsvariante eines solchen Flachgetriebes 58, wie es in anderer Ausführungsform in den Figuren 4A und 4B gezeigt ist. Ein Gehäuse 60 dieses in Fig. 4C gezeigten Getriebes 58 ist drehfest mit der ersten Gelenkwelle 40 verbunden, so dass sich diese mit den Drehungen des Gehäuses 60 des Flachgetriebes 58 in gewünschter Weise dreht und dabei den rotierbaren Abschnitt 36 im Werkzeugkopf 26 verdreht (vgl. z.B. Fig. 3B). Innerhalb des Gehäuses 60 ist eine Riemenstufe 62 mit einem Zahnriemen 64 oder einem anderen geeigneten Zugmittel angeordnet, die für eine von der Winkellage des Getriebes 58 unabhängige Drehung der zweiten Gelenkwelle 46 sorgen kann. Die Riemenstufe 62 wird von einer Antriebswelle 66 mit darauf befindlichem Antriebsrad 68 und einem mit der zweiten Gelenkwelle 46 drehfest verbundenen Abtriebsrad 70 gebildet, wobei der Zahnriemen 64 über das Antriebsrad 68 und das Abtriebsrad 70 läuft. Die Antriebswelle 66 reicht durch die obere Aufhängung 18 hindurch, so dass die oberhalb der Aufhängung 18 befindlichen Antriebsmotoren sowohl das Gehäuse 60 des Getriebes 58 mitsamt der damit drehfest verbundenen ersten Gelenkwelle 40 als auch die in die Riemenstufe 62 hineinreichende Antriebswelle 66 zum Antreiben der zweiten Gelenkwelle 46 antreiben können. Zum Antrieb des Getriebegehäuses 60 und der damit drehfest verbundenen ersten Gelenkwelle 40 dient eine Hohlwelle 71, durch die hindurch die Antriebswelle 66 zum Antrieb der Riemenstufe 62 verläuft.

Die schematische Draufsicht der Fig. 5 zeigt schließlich ein Beispiel eines Werkzeugkopfes 26 des Manipulators 16, der an den Unterarmen 24 der insgesamt drei Stellarme 20 des Parallelkinematik-Roboters 10 aufgehängt ist, wie dies bspw. die Fig. 2 verdeutlicht. Innerhalb des Werkzeugkopfes 26 wirkt die erste Gelenkwelle (hier nicht dargestellt) drehfest mit einem einzelnen, außenverzahnten Sonnenrad 72 eines Planetengetriebes 74 zusammen bzw. ist mit diesem drehfest verbunden, das im Verzahnungseingriff mit einem Hohlrad 76 mit Innenverzahnung 78 steht. Das mittels der ersten Gelenkwelle verdrehte Sonnenrad 72, das ortsfest im Werkzeugkopf 26 gelagert ist, verdreht das im Werkzeugkopf 26 drehbar gelagerte Hohlrad 76, das wiederum drehfest mit dem Anschlusselement 38 verbunden ist, an dem die Stellelemente 44 angeordnet sind, im gezeigten Ausführungsbeispiel gegeneinander zustellbare Greifbacken 80 eines hier nicht detaillierter ausgeführten Greifarms 82.

Der von der zweiten Gelenkwelle betätigte Wirkmechanismus zur Linearverschiebung der Greifbacken 80 ist in Fig. 5 der besseren Übersichtlichkeit halber nicht dargestellt.

Die Erfindung wurde unter Bezugnahme auf die Figuren 1 bis 5 beschrieben. Es ist jedoch für einen Fachmann vorstellbar, dass Abwandlungen oder Änderungen des erfindungsgemäßen Parallelkinematik-Roboters 10 vorgenommen werden können, ohne dass dadurch der Schutzbereich der nachstehenden Ansprüche verändert und/oder überschritten wird.

### Bezugszeichenliste

- 10: Roboter, Parallelkinematik-Roboter, Deltakinematik-Roboter
- 12: Förderabschnitt, Horizontalförderabschnitt, Horizontalfördereinrichtung
- 14: Vorrichtung, Handhabungs-, Förder-, Gruppierungs-, Verpackungsvorrichtung
- 16: Greifeinheit, Manipulationseinheit, Manipulator
- 18: obere Aufhängung
- 20: Stellarm, Gelenkarm
- 22: Oberarm, oberer Armabschnitt
- 24: Unterarm, unterer Armabschnitt
- 26: Koppelabschnitt, Tool-Center-Point (TCP), Werkzeugträger, Werkzeugkopf, Werkzeughalter
- 28: Greifeinrichtung
- 30: Bewegungsraum, Arbeitsraum
- 32: Stützträger
- 34: Rahmengestell, Rahmen
- 36: rotierbarer Abschnitt, rotierender Abschnitt (des Koppelabschnittes, Tool-Center-Points, Werkzeugträgers und/oder Werkzeugkopfes)
- 38: Anschlusselement
- 40: erste Welle, erste Gelenkwelle, Welle
- 42: erster Antriebsmotor, erster elektrischer Antriebsmotor, erster Antrieb, Drehantrieb
- 44: Stellelement, Aktor
- 46: zweite Welle, zweite Gelenkwelle, Welle
- 48: zweiter Antriebsmotor, zweiter elektrischer Antriebsmotor, zweiter Antrieb, Drehantrieb
- 50: gelenkige Lagerung (des Oberarms)
- 52: Antriebsmotor (des Oberarms), Antrieb
- 54: untere Drehdurchführung (der zweiten Welle bzw. der zweiten Gelenkwelle)
- 56: Schiebehülse, teleskopierbarer Abschnitt (der Welle bzw. Gelenkwelle)
- 58: Flachgetriebe, Satelliten-Flachgetriebe, Getriebe
- 60: Gehäuse, Getriebegehäuse
- 62: Riemenstufe
- 64: Zahnriemen, Zugmittel
- 66: Antriebswelle
- 68: Antriebsrad
- 70: Abtriebsrad
- 71: Hohlwelle
- 72: Sonnenrad
- 74: Planetengetriebe, Getriebe, Zahnradgetriebe
- 76: Hohlrad
- 78: Innenverzahnung (des Hohlrads)
- 80: Greifbacken
- 82: Greifarm

## Patentansprüche

1. Parallelkinematik-Roboter (10), umfassend:
- eine Aufhängung (18) oder Basis, an welcher wenigstens zwei separat angetriebene und unabhängig voneinander bewegbare Stellarme (20) gelenkig befestigt bzw. gelagert sind, die jeweils durch einen mittels Antrieb (52) bewegbaren Oberarm (22) und einen gelenkig daran gelagerten Unterarm (24) gebildet sind, sowie
- einen an den Unterarmen (24) der wenigstens zwei Stellarme (20) gelenkig gelagerten und mittels Bewegungen der Stellarme (20) innerhalb eines definierbaren Bewegungsraumes (30) bewegbaren Manipulator (16) und/oder Werkzeughalter oder Werkzeugkopf (26),
wobei der Manipulator (16) und/oder Werkzeughalter oder Werkzeugkopf (26) einen mittels eines ersten mechanischen Drehübertragungselementes gegenüber der Aufhängung (18) oder Basis bzw. gegenüber den Stellarmen (20) rotierbaren Abschnitt (36) aufweist,
wobei dem rotierbaren Abschnitt (36) des Manipulators (16) und/oder Werkzeughalters oder Werkzeugkopfes (26) wenigstens ein weiterer Aktor und/oder ein weiteres bewegliches Stellelement (44) zugeordnet ist/sind, dessen/deren Stellbewegungen von einem zweiten mechanischen Drehübertragungselement steuerbar sind,
wobei das erste mechanische Drehübertragungselement und das zweite mechanische Drehübertragungselement jeweils mechanische Drehantriebsverbindungen zwischen separaten Stellantrieben, die der Aufhängung oder Basis zugeordnet sind, und dem Manipulator (16) und/oder Werkzeughalter oder Werkzeugkopf (26) bzw. dessen/deren rotierbaren Abschnitt (36) und/oder dessen/deren beweglichen und/oder angetriebenen Aktoren bzw. Stellelementen (44) herstellen,
und wobei das erste mechanische Drehübertragungselement und das zweite mechanische Drehübertragungselement jeweils durch separate und beabstandet voneinander angeordnete Wellen, insbesondere Gelenkwellen (40, 46) gebildet sind, **dadurch gekennzeichnet, dass** der zweiten Welle bzw. Gelenkwelle (46) im Bereich der Aufhängung (18) bzw. der Basis eine an Rotationsbewegungen der ersten Welle bzw. Gelenkwelle (40) gekoppelte, mitdrehende Lagerung zugeordnet ist.

2. Parallelkinematik-Roboter nach Anspruch 1, bei dem die erste Welle bzw. Gelenkwelle (40) ausgehend von einem Stellantrieb in Drehverbindung mit dem rotierbaren Abschnitt (36) des Manipulators (16) und/oder Werkzeughalters oder Werkzeugkopfes (26) steht.

3. Parallelkinematik-Roboter nach Anspruch 1 oder 2, bei dem die zweite Welle bzw. Gelenkwelle (46) mit einem Stellantrieb für den weiteren Aktor bzw. das weitere bewegliche Stellelement (44) in Drehverbindung steht.

4. Parallelkinematik-Roboter nach einem der Ansprüche 1 bis 3, bei dem im Manipulator (16) und/oder Werkzeughalter oder Werkzeugkopf (26) ein Getriebe bzw. Zahnradgetriebe zur Übertragung der Rotation der ersten Welle oder Gelenkwelle (40) in eine synchrone oder übersetzte Drehbewegung des rotierbaren Abschnittes (36) des Manipulators (16) und/oder Werkzeughalters oder Werkzeugkopfes (26) angeordnet ist.

5. Parallelkinematik-Roboter nach Anspruch 4, bei dem das Zahnradgetriebe als Planetengetriebe (74) ausgebildet ist, dessen wenigstens eines Sonnenrad (72) in Drehverbindung mit der ersten Welle bzw. Gelenkwelle (40) steht und sich im Verzahnungseingriff mit einem Hohlrad (76) befindet, das den weiteren Aktor bzw. das weitere bewegliche Stellelement rotierend antreibt.

6. Parallelkinematik-Roboter nach einem der Ansprüche 1 bis 5, bei dem der zweiten Welle bzw. Gelenkwelle (46) im Bereich der Aufhängung (18) bzw. der Basis eine ortsfeste Lagerung zugeordnet ist.

7. Parallelkinematik-Roboter nach einem der Ansprüche 1 bis 6, bei dem die Lagerung der zweiten Welle bzw. Gelenkwelle (46) über ein Zugmittel (64) bzw. eine Riemenstufe (62) und/oder ein Getriebe (58) annähernd konzentrisch zu Rotationsbewegungen der ersten Welle bzw. Gelenkwelle (40) mitrotiert.

8. Parallelkinematik-Roboter nach einem der Ansprüche 1 bis 7, bei dem den ersten und zweiten Wellen bzw. Gelenkwellen (40, 46) jeweils separate Drehantriebe (42, 48) zugeordnet sind, wobei diese insbesondere als Hohlwellen-Kombigetriebe oder als separate Motor-Getriebe-Einheiten angeordnet sein können.

9. Parallelkinematik-Roboter (10) gemäß einem der Ansprüche 1 bis 8 zur Handhabung, zum Stapeln und/oder zum Manipulieren von Artikeln, Gruppierungen, Gebinden, Stückgütern, Gebinde- und/oder Stückgutlagen oder dergleichen, wobei der Manipulator (16) und/oder der Werkzeughalter oder Werkzeugkopf (26) ein Mittel oder mehrere Mittel zum Greifen und/oder Handhaben der Artikel, Gruppierungen, Gebinde, Stückgüter, Gebinde- und/oder Stückgutlagen und/oder ein Fertigungs- oder Montagewerkzeug umfasst und mit den Unterarmen (24) der wenigstens zwei Stellarme (20) mechanisch gekoppelt ist, so dass durch eine Bewegung eines oder mehrerer der wenigstens zwei Stellarme (20) eine Position des Manipulators (16) und/oder des Werkzeughalters oder Werkzeugkopfes (26) vorgegeben werden kann.

10. Verfahren zum Betreiben und/oder zur Handhabung eines Parallelkinematik-Roboters (10) gemäß einem der Ansprüche 1 bis 9, welcher zumindest die folgenden Komponenten umfasst:
- eine Aufhängung (18) oder Basis, an welcher wenigstens zwei separat angetriebene und unabhängig voneinander bewegbare Stellarme (20) gelenkig befestigt bzw. gelagert sind, die jeweils durch einen mittels Antrieb (52) bewegbaren Oberarm (22) und einen gelenkig daran gelagerten Unterarm (24) gebildet sind, sowie
- einen an den Unterarmen (24) der wenigstens zwei Stellarme (20) gelenkig gelagerten und mittels Bewegungen der Stellarme (20) innerhalb eines definierbaren Bewegungsraumes (30) bewegbaren Manipulator (16) und/oder Werkzeughalter oder Werkzeugkopf (26),
wobei der Manipulator (16) und/oder Werkzeughalter oder Werkzeugkopf (26) einen mittels eines ersten mechanischen Drehübertragungselementes gegenüber der Aufhängung (18) oder Basis bzw. gegenüber den Stellarmen (20) rotierbaren Abschnitt (36) aufweist,
wobei dem rotierbaren Abschnitt (36) des Manipulators (16) und/oder Werkzeughalters oder Werkzeugkopfes (26) wenigstens ein weiterer Aktor und/oder ein weiteres bewegliches Stellelement (44) zugeordnet ist, dessen Stellbewegungen von einem zweiten mechanischen Drehübertragungselement steuerbar sind,
wobei das erste mechanische Drehübertragungselement und das zweite mechanische Drehübertragungselement jeweils mechanische Drehantriebsverbindungen zwischen separaten Stellantrieben, die der Aufhängung oder Basis zugeordnet sind, und dem Manipulator (16) und/oder Werkzeughalter oder Werkzeugkopf (26) bzw. dessen/deren rotierbaren Abschnitt (36) und/oder dessen/deren beweglichen und/oder angetriebenen Aktoren bzw. Stellelementen (44) herstellen,
und wobei das erste mechanische Drehübertragungselement und das zweite mechanische Drehübertragungselement jeweils durch separate und beabstandet voneinander angeordnete Wellen (40, 46) gebildet sind,
wobei bei einer durch Drehung der ersten Welle (40) induzierten Rotation des rotierbaren Abschnittes (36) des Manipulators (16) und/oder Werkzeughalters oder Werkzeugkopfes (26) die zweite Welle (46) zumindest teilweise mit der ersten Welle (40) verschränkt wird und/oder sich mit deren Rotation zumindest teilweise konzentrisch zu dieser mitdreht.

11. Verfahren nach Anspruch 10, bei dem das erste mechanische Drehübertragungselement und das zweite mechanische Drehübertragungselement jeweils durch separate und beabstandet voneinander angeordnete Gelenkwellen (40, 46) gebildet sind, wobei die erste Welle bzw. Gelenkwelle (40) den rotierbaren Abschnitt (36) des Manipulators (16) und/oder Werkzeughalters oder Werkzeugkopfes (26) dreht, und wobei die zweite Welle bzw. Gelenkwelle (46) einen Stellantrieb für den weiteren Aktor bzw. das weitere bewegliche Stellelement (44) betätigt.

12. Verwendung eines Parallelkinematik-Roboters (10) gemäß einem der Ansprüche 1 bis 9 als Industrieroboter zur Handhabung, zum Stapeln und/oder zum Manipulieren von Artikeln, Gruppierungen, Gebinden, Stückgütern, Gebinde- und/oder Stückgutlagen oder dergleichen Gegenständen im Zusammenhang mit dem Transport und Beförderung, der Verarbeitung, der Verpackung und/oder der Palettierung der Artikel, Gruppierungen, Gebinde, Stückgüter und/oder Gebinde- und/oder Stückgutlagen.

13. Verwendung eines Parallelkinematik-Roboters (10) gemäß einem der Ansprüche 1 bis 9 als Industrieroboter zur Führung wenigstens eines Werkzeuges im Zusammenhang mit der Fertigung, Mittel- und/oder Beschichtungsapplikation, Montage, Manipulation und/oder Handhabung in einer Fertigungs- und/oder Industrieumgebung.

## Claims

1. A parallel kinematic robot (10), comprising:
- a suspension (18) or base, to which at least two positioning arms (20) that are separately driven and movable independently of one another are articulately fastened or, as applicable, articulately mounted, which positioning arms (20) are each formed by an upper arm (22) that is movable by a drive (52) and a lower arm (24) articulately mounted thereto, as well as
- a manipulator (16) and/or tool holder or tool head (26) that is articulately mounted to the lower arms (24) of the at least two positioning arms (20) and that is movable within a definable movement range (30) by movements of the positioning arms (20),
wherein the manipulator (16) and/or tool holder or tool head (26) has a section (36) that is rotatable in relation to the suspension (18) or base or, as applicable, in relation to the positioning arms (20) by a first mechanical rotary transmission element, wherein at least one further actuator and/or one further movable actuating element (44) is/are assigned to the rotatable section (36) of the manipulator (16) and/or of the tool holder or tool head (26), the positioning movements of which further actuator and/or further movable actuating element (44) are controllable by a second mechanical rotary transmission element,
wherein the first mechanical rotary transmission element and the second mechanical rotary transmission element in each case produce mechanical rotary drive connections between separate actuators assigned to the suspension or to the base and the manipulator (16) and/or tool holder or tool head(26) or, as applicable, the rotatable section (36) thereof and/or the movable and/or driven actuators or, as applicable, the actuating elements (44) thereof,
and wherein the first mechanical rotary transmission element and the second mechanical rotary transmission element are each formed by separate shafts, in particular drive shafts (40, 46), that are arranged spaced apart from each other, **characterised in that** a co-rotating bearing coupled to the rotational movements of the first shaft or, as applicable, of the first drive shaft (40) is assigned to the second shaft or, as applicable, to the second drive shaft (46) in the area of the suspension (18) or, as applicable, of the base.

2. The parallel kinematic robot according to claim 1, in which the first shaft or, as applicable, the first drive shaft (40) is in rotational connection, extending from an actuating drive, with the rotatable section (36) of the manipulator (16) and/or of the tool holder or tool head (26).

3. The parallel kinematic robot according to claim 1 or 2, in which the second shaft or, as applicable, the second drive shaft (46) is in rotational connection with an actuating drive for the further actuator or, as applicable, for the further movable actuating element (44).

4. The parallel kinematic robot according to one of the claims 1 to 3, in which a gearing mechanism or, as applicable, a gear transmission for the transmission of the rotation of the first shaft or drive shaft (40) into a synchronous or transmitted rotary movement of the rotatable section (36) of the manipulator (16) and/or of the tool holder or tool head (26) is arranged in the manipulator (16) and/or in the tool holder or tool head (26).

5. The parallel kinematic robot according to claim 4, in which the gear transmission is designed as a planetary transmission (74) of which the at least one sun gear (72) is in rotational connection with the first shaft or, as applicable, with the first drive shaft (40) and is in meshing engagement with an internal gear (76), which rotatingly drives the further actuator or, as applicable, the further movable actuating element.

6. The parallel kinematic robot according to one of the claims 1 to 5, in which a stationary bearing is assigned to the second shaft or, as applicable, to the second drive shaft (46) in the area of the suspension (18) or, as applicable, of the base.

7. The parallel kinematic robot according to one of the claims 1 to 6, in which the bearing of the second shaft or, as applicable, of the second drive shaft (46) co-rotates approximately concentrically to the rotational movements of the first shaft or, as applicable, of the first drive shaft (40) via a traction means (64) or, as applicable, via a belt stage (62) and/or via a gearing mechanism (58).

8. The parallel kinematic robot according to one of the claims 1 to 7, in which separate rotary drives (42, 48) are in each case assigned to the first and second shafts or, as applicable, to the first and second drive shafts (40, 46), wherein the rotary drives can be arranged, in particular, as hollow shaft combination gear mechanisms or as separate motor gear units.

9. The parallel kinematic robot (10) according to one of the claims 1 to 8, used for the handling, stacking and/or manipulating of articles, groupings, packs, piece goods, pack layers and/or piece good layers, or the like, wherein the manipulator (16) and/or the tool holder or tool head (26) comprises a means or a plurality of means for gripping and/or handling the articles, groupings, packs, piece goods, pack layers and/or piece good layers, and/or comprises a production tool or assembly tool, and is mechanically coupled with the lower arms (24) of the at least two positioning arms (20), such that a position of the manipulator (16) and/or of the tool holder or tool head (26) can be specified by a movement of one or more of the at least two positioning arms (20).

10. A method for operating and/or handling a parallel kinematic robot (10) according to one of the claims 1 to 9, which comprises at least the following components:
- a suspension (18) or base, to which at least two positioning arms (20) that are separately driven and movable independently of one another are articulately fastened or, as applicable, articulately mounted, which positioning arms (20) are each formed by an upper arm (22) that is movable by a drive (52) and a lower arm (24) articulately mounted thereto, as well as
- a manipulator (16) and/or tool holder or tool head (26) that is articulately mounted to the lower arms (24) of the at least two positioning arms (20) and that is movable within a definable movement range (30) by movements of the positioning arms (20),
wherein the manipulator (16) and/or tool holder or tool head (26) has a section (36) that is rotatable in relation to the suspension (18) or base or, as applicable, in relation to the positioning arms (20) by a first mechanical rotary transmission element, wherein at least one further actuator and/or one further movable actuating element (44) is/are assigned to the rotatable section (36) of the manipulator (16) and/or of the tool holder or tool head (26), the positioning movements of which further actuator and/or further movable actuating element (44) are controllable by a second mechanical rotary transmission element,
wherein the first mechanical rotary transmission element and the second mechanical rotary transmission element in each case produce mechanical rotary drive connections between separate actuators assigned to the suspension or to the base and the manipulator (16) and/or tool holder or tool head(26) or, as applicable, the rotatable section (36) thereof and/or the movable and/or driven actuators or, as applicable, the actuating elements (44) thereof,
and wherein the first mechanical rotary transmission element and the second mechanical rotary transmission element are each formed by separate shafts (40, 46) that are arranged spaced apart from each other,
wherein, in a rotation of the rotatable section (36) of the manipulator (16) and/or of the tool holder or tool head (26) induced by a rotation of the first shaft (40), the second shaft (46) is at least partially interlocked with the first shaft (40) and/or at least partially concentrically co-rotates with the rotation of the first shaft (40).

11. The method according to claim 10, in which the first mechanical rotary transmission element and the second mechanical rotary transmission element are each formed by separate drive shafts (40, 46) that are arranged spaced apart from each other, wherein the first shaft or, as applicable, the first drive shaft (40) rotates the rotatable section (36) of the manipulator (16) and/or of the tool holder or tool head (26), and wherein the second shaft or, as applicable, the second drive shaft (46) actuates an actuating drive for the further actuator or, as applicable, for the further movable actuating element (44).

12. A use of a parallel kinematic robot (10) according to one of the claims 1 to 9 as an industrial robot used for the handling, stacking, and/or manipulating of articles, groupings, packs, piece goods, pack layers and/or piece good layers, or the like objects, in the context of the transport and conveyance, of the processing, the packaging and/or palletising of the articles, groupings, packs, piece goods, and/or pack layers and/or piece good layers.

13. The use of a parallel kinematic robot (10) according to one of the claims 1 to 9 as an industrial robot used for the guiding of at least one tool in the context of production, application of agents and/or application of coating, assembly, manipulation, and/or handling in a production environment and/or an industry environment.

## Revendications

1. Robot à cinématique parallèle (10) comprenant:
- une suspension (18) ou base sur laquelle sont fixés de manière articulée ou bien logés au moins deux bras de réglage (20) qui sont entraînés séparément et aptes à être déplacés indépendamment l'un de l'autre et qui sont constitués chacun par un bras supérieur (22) déplaçable au moyen d'un mécanisme d'entraînement (52) et par un bras inférieur (24) logé de manière articulée sur celui-ci, ainsi qu'
- un manipulateur (16) et/ou un porte-outil ou une tête d'outil (26) qui est logé(e) de manière articulée sur les bras inférieurs (24) desdits au moins deux bras de réglage (20) et peut être déplacé(e) à l'intérieur d'une plage de mouvement (30) définissable, par des mouvements des bras de réglage (20),
dans lequel le manipulateur (16) et/ou le porte-outil ou la tête d'outil (26) comprend une portion (36) qui peut être mise en rotation au moyen d'un premier élément de transmission de rotation mécanique par rapport à la suspension (18) ou à la base ou bien par rapport aux bras de réglage (20),
dans lequel à la portion rotative (36) du manipulateur (16) et/ou du porte-outil ou de la tête d'outil (26) est/sont associé(s) au moins un autre actionneur et/ou un autre élément de réglage mobile (44) dont les mouvements de réglage peuvent être commandés par un deuxième élément de transmission de rotation mécanique,
dans lequel le premier élément de transmission de rotation mécanique et le deuxième élément de transmission de rotation mécanique établissent chacun des liaisons mécaniques d'entraînement en rotation entre des mécanismes de commande séparés qui sont associés à la suspension ou à la base, et le manipulateur (16) et/ou le porte-outil ou la tête d'outil (26) ou bien la portion rotative (36) de celui-ci/celle-ci et/ou les actionneurs ou bien les éléments de réglage (44) mobiles et/ou entraînés de celui-ci/celle-ci,
et dans lequel le premier élément de transmission de rotation mécanique et le deuxième élément de transmission de rotation mécanique sont chacun constitués par des arbres séparés et espacés, en particulier par des arbres articulés (40, 46), **caractérisé par le fait qu'**au deuxième arbre ou bien arbre articulé (46) est associé, au niveau de la suspension (18) ou bien de la base, un palier tournant couplé à des mouvements de rotation du premier arbre ou bien arbre articulé (40).

2. Robot à cinématique parallèle selon la revendication 1, dans lequel, à partir d'un mécanisme de commande, le premier arbre ou bien arbre articulé (40) est en liaison rotative avec la portion rotative (36) du manipulateur (16) et/ou du porte-outil ou de la tête d'outil (26).

3. Robot à cinématique parallèle selon la revendication 1 ou 2, dans lequel le deuxième arbre ou bien arbre articulé (46) est en liaison rotative avec un mécanisme de commande pour l'autre actionneur ou bien l'autre élément de réglage (44) mobile.

4. Robot à cinématique parallèle selon l'une quelconque des revendications 1 à 3, dans lequel une transmission ou bien un engrenage destiné(e) à transmettre la rotation du premier arbre ou arbre articulé (40) en un mouvement de rotation synchrone ou multiplié de la portion rotative (36) du manipulateur (16) et/ou du porte-outil ou de la tête d'outil (26) est agencé(e) dans le manipulateur (16) et/ou le porte-outil ou la tête d'outil (26).

5. Robot à cinématique parallèle selon la revendication 4, dans lequel l'engrenage est réalisé sous la forme d'un engrenage planétaire (74) dont ledit au moins un planétaire (72) est en liaison rotative avec le premier arbre ou bien l'arbre articulé (40) et est en prise avec une roue à denture intérieure (76) qui entraîne en rotation l'autre actionneur ou bien l'autre élément de réglage mobile.

6. Robot à cinématique parallèle selon l'une quelconque des revendications 1 à 5, dans lequel un palier fixe est associé au deuxième arbre ou bien à l'arbre articulé (46) au niveau de la suspension (18) ou bien de la base.

7. Robot à cinématique parallèle selon l'une quelconque des revendications 1 à 6, dans lequel le palier du deuxième arbre ou bien de l'arbre articulé (46) tourne approximativement de manière concentrique par rapport à des mouvements de rotation du premier arbre ou bien de l'arbre articulé (40) par l'intermédiaire d'un moyen de traction (64) ou bien d'un pas de courroie (62) et/ou d'un engrenage (58).

8. Robot à cinématique parallèle selon l'une quelconque des revendications 1 à 7, dans lequel des mécanismes d'entraînements rotatifs (42, 48) respectivement séparés sont associés aux premiers et deuxièmes arbres ou bien arbres articulés (40, 46), ceux-ci pouvant être agencés en particulier en tant qu'engrenages combinés à arbre creux ou comme ensembles moteur-engrenage séparés.

9. Robot à cinématique parallèle (10) selon l'une quelconque des revendications 1 à 8, pour la manutention, l'empilage et/ou la manipulation d'articles, de groupements, de multipacks, de produits de détail, de couches de multipack et/ou de produits de détail ou similaires, dans lequel le manipulateur (16) et/ou le porte-outil ou la tête d'outil (26) comprend un ou plusieurs moyens de préhension et/ou de manipulation des articles, groupements, multipacks, produits de détail, couches de multipack et/ou de produits de détail et/ou un outillage de production ou d'assemblage et est couplé mécaniquement aux bras inférieurs (24) desdits au moins deux bras de réglage (20) de sorte qu'une position du manipulateur (16) et/ou du porte-outil ou de la tête d'outil (26) puisse être spécifiée par un mouvement d'un ou de plusieurs desdits au moins deux bras de réglage (20).

10. Procédé destiné à faire fonctionner et/ou à manipuler un robot à cinématique parallèle (10) selon l'une quelconque des revendications 1 à 9, qui comprend au moins les éléments suivants:
- une suspension (18) ou base sur laquelle sont fixés de manière articulée ou bien logés au moins deux bras de réglage (20) qui sont entraînés séparément et aptes à être déplacés indépendamment l'un de l'autre et qui sont constitués chacun par un bras supérieur (22) déplaçable au moyen d'un mécanisme d'entraînement (52) et par un bras inférieur (24) logé de manière articulée sur celui-ci, ainsi qu'
- un manipulateur (16) et/ou un porte-outil ou une tête d'outil (26) qui est logé(e) de manière articulée sur les bras inférieurs (24) desdits au moins deux bras de réglage (20) et peut être déplacé(e) à l'intérieur d'une plage de mouvement (30) définissable, par des mouvements des bras de réglage (20),
dans lequel le manipulateur (16) et/ou le porte-outil ou la tête d'outil (26) comprend une portion (36) qui peut être mise en rotation au moyen d'un premier élément de transmission de rotation mécanique par rapport à la suspension (18) ou à la base ou bien par rapport aux bras de réglage (20),
dans lequel à la portion rotative (36) du manipulateur (16) et/ou du porte-outil ou de la tête d'outil (26) est associé au moins un autre actionneur et/ou un autre élément de réglage mobile (44) dont les mouvements de réglage peuvent être commandés par un deuxième élément de transmission de rotation mécanique,
dans lequel le premier élément de transmission de rotation mécanique et le deuxième élément de transmission de rotation mécanique établissent chacun des liaisons mécaniques d'entraînement en rotation entre des mécanismes de commande séparés qui sont associés à la suspension ou à la base, et le manipulateur (16) et/ou le porte-outil ou la tête d'outil (26) ou bien la portion rotative (36) de celui-ci/celle-ci et/ou les actionneurs ou bien les éléments de réglage (44) mobiles et/ou entraînés de celui-ci/celle-ci,
et dans lequel le premier élément de transmission de rotation mécanique et le deuxième élément de transmission de rotation mécanique sont chacun constitués par des arbres (40, 46) séparés et espacés,
dans lequel, dans le cas d'une rotation de la portion rotative (36) du manipulateur (16) et/ou du porte-outil ou de la tête d'outil (26), qui est induite par une rotation du premier arbre (40), le deuxième arbre (46) est au moins en partie entrelacé avec le premier arbre (40) et/ou tourne avec la rotation de celui-ci au moins en partie concentriquement à celui-ci.

11. Procédé selon la revendication 10, dans lequel le premier élément de transmission de rotation mécanique et le deuxième élément de transmission de rotation mécanique sont chacun constitués par des arbres articulés (40, 46) séparés et espacés, dans lequel le premier arbre ou bien arbre articulé (40) fait tourner la portion rotative (36) du manipulateur (16) et/ou du porte-outil ou de la tête d'outil (26), et dans lequel le deuxième arbre ou bien arbre articulé (46) actionne un mécanisme de commande pour l'autre actionneur ou bien l'autre élément de réglage mobile (44).

12. Utilisation d'un robot à cinématique parallèle (10) selon l'une quelconque des revendications 1 à 9, en tant que robot industriel (10) destiné à manier, à empiler et/ou à manipuler des articles, des groupements, des multipacks, des produits de détail, des couches de multipacks et/ou de produits de détail ou des objets similaires, en relation avec le transport et le convoyage, le traitement, l'emballage et/ou la palettisation des articles, des groupements, des multipacks, des produits de détail et/ou des couches de multipacks et/ou de produits de détail.

13. Utilisation d'un robot à cinématique parallèle (10) selon l'une quelconque des revendications 1 à 9 en tant que robot industriel pour guider au moins un outil en relation avec la fabrication, l'application d'agent et/ou de revêtement, l'assemblage, la manipulation et/ou la manutention dans un environnement de production et/ou industriel.
